# EUROPEAN PATENT SPECIFICATION

(11) **EP 1 437 909 B1**
(45) Date of publication and mention of the grant of the patent: **31.05.2006**
(21) Application number: 03029120.7
(22) Date of filing: 18.12.2003
(51) Int. Cl.: H04Q 7/38

(54) **Apparatus for restricting communication depending on area**
Vorrichtung zum Einschränken der Kommunikation abhängig vom Gebiet
Appareil pour limiter une communication en fonction de la localisation

(30) Priority: 07.01.2003 JP 2003001414
(43) Date of publication of application: 14.07.2004
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: Kawamoto, Yoshikazu, Inagi-shi, Tokyo 206-8555 (JP)
(74) Representative: Kreutzer, Ulrich

(56) References cited:
- EP-A- 0 880 296
- EP-A- 1 035 747
- WO-A-96/31021
- DE-A- 10 041 070
- GB-A- 2 368 497
- US-A1- 2002 028 674

## Description

### BACKGROUND OF THE INVENTION

### 1) Field of the Invention

The present invention relates to a portable communication apparatus including a radio communication unit that performs communication over a radio wave, and particularly relates to a communication apparatus which can restrict the communication with the radio wave in a specific area, for example, within a hospital or an airplane.

### 2) Description of the Related Art

Recently, communication terminals such as wireless local area networks (LANs), cellular phones, and personal digital assistances (PDAs) have increasingly spread. However, radio waves generated by these communication terminals can cause adverse effects on surrounding environment. For example, in hospitals or airplanes, the radio waves cause adverse effect on devices around the communication terminals and, in some cases, even cause an accident that endangers life. Further, in conference rooms, movie theaters or concert halls, ring tones of arriving call from the communication terminals impede the silence.

To solve these problems, communication devices and communication control devices, each of which forms a radio area and which controls a power of a mobile communication terminal that enters the radio area to be turned off, have been developed (see, for example, Japanese Patent Application Laid-open Publication No. 2001-218264). Specifically, the radio area is formed using Bluetooth wireless technology, which is a communication protocol using a lower transmission power than those of base stations, to thereby detect entry of a mobile communication terminal. If the entry of the mobile communication terminal is detected, an operation state of the mobile terminal is controlled to be changed to an OFF state. The European Patent Application EP-A-1 035 747 discloses a mobile terminal which outputs a warning signal to the user and switches off at least the radio frequency parts when it detects a protection signal.

However, the conventional devices restrict communication over radio waves at the specific area using other radio waves. The other radio waves that are used to restrict may, in turn, possibly adversely affect devices installed in the hospital or of the airplane. For this reason, it is difficult to use the conventional devices so as to restrict radio waves at the specific area.

### SUMMARY OF THE INVENTION

It is an object of the present invention to at least solve the problems in the conventional technology. This object is achieved according to the features of the appended claims 1-5.

The other objects, features and advantages of the present invention are specifically set forth in or will become apparent from the following detailed descriptions of the invention when read in conjunction with the accompanying drawings.

### BRIEF DESCRIPTION OF THE DRAWINGS

Fig. 1 is a block diagram of a communication apparatus in a first embodiment;
Fig. 2 is an illustration of an area detection section;
Fig. 3 is a flow chart indicating processing procedures of the communication apparatus in the first embodiment;
Fig. 4 is a block diagram of a communication apparatus in a second embodiment;
Fig. 5 is a flow chart indicating processing procedures of the communication apparatus in the second embodiment;
Fig. 6 is a block diagram of a communication apparatus in a third embodiment;
Fig. 7 is a flow chart indicating processing procedures of the communication apparatus in the third embodiment; and
Fig. 8 is a flow chart indicating procedures for restart processing performed by the communication apparatus in the third embodiment.

### DETAILED DESCRIPTION

Exemplary embodiments of a communication apparatus according to the present invention will be explained below in detail with reference to the accompanying drawings. In the embodiments, an outline and features of the communication apparatus in the embodiments will be explained first, communication apparatus in the first to the third embodiments will be explained next, and various modifications will be finally explained as other embodiments.

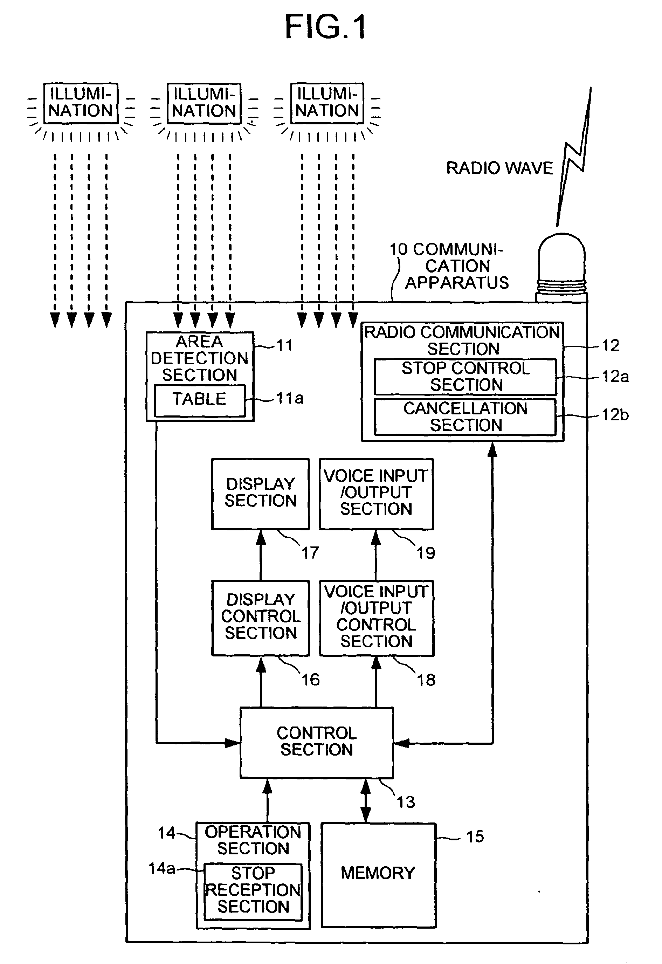

The outline and features of the communication apparatus in the embodiments will first be explained. Fig. 1 is a block diagram of a communication apparatus in a first embodiment. The communication apparatus 10 shown in Fig. 1 is generally a portable communication apparatus (e.g., cellular phone or personal handyphone system) including a radio communication unit that performs communication over radio waves.

This communication apparatus is mainly characterized by the following stop control processing. The communication apparatus detects whether the communication apparatus is present in a warning area based on a medium other than a radio wave traveling in the area. A typical of the medium is a wave that travels with a frequency in the area, and is, for example, an electromagnetic wave (e.g., light, infrared) or an ultrasonic wave. If the communication apparatus is present in the warning area, the communication apparatus notifies a user that the communication apparatus is present in the warning area. The communication apparatus receives a notification of stop of functions of a radio communication unit from the user and stops the functions. This stop control processing enables the user to spontaneously restrict the radio wave at the specific area. In addition, the communication apparatus 10 detects whether the communication apparatus is present in a prohibited area by the medium other than the radio wave that travels in the area. If the communication apparatus 10 is present in the prohibited area, the communication apparatus 10 stops the functions of the radio communication unit. Therefore, the communication apparatus can force the radio wave to be restricted at the specific area.

These main features will be explained specifically. In the communication apparatus 10, an area detection unit 11 detects whether the communication apparatus 10 is present in either the prohibited area in which radio communication should be prohibited or the warning area adjacent to the prohibited area based on the medium other than the radio wave.

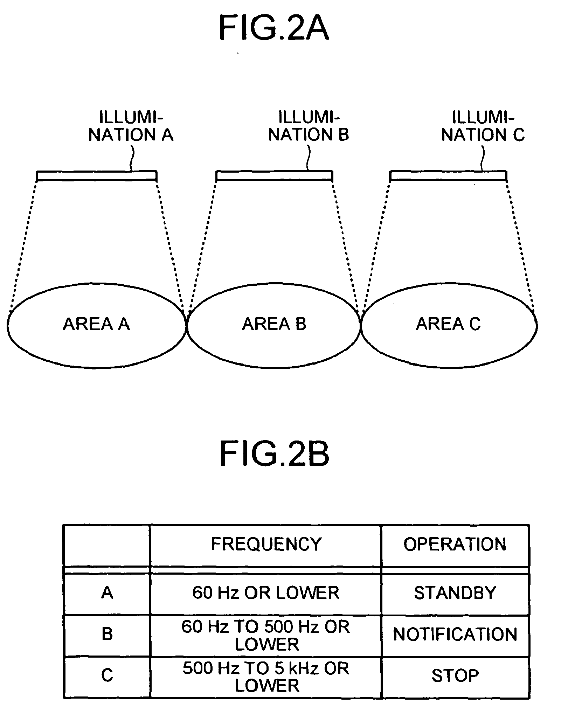

Namely, the area detection unit 11 detects in which area the communication apparatus 10 is present, the warning area (corresponding to an area B) or the prohibited area (corresponding to an area C) from a difference in frequency among illuminations A, B, and C shown in Fig. 2A (an area A: 60 hertz or lower, the area B: 60 hertz to 500 hertz or lower, and the area C: 500 hertz to 5 kilohertz or lower (see Fig. 2B), and outputs an instruction corresponding to the detected area to a control section 13 based on a table 11 a (A: standby, B: notification, and C: stop).

If the communication apparatus 10 is present in the warning area (area B), a display section 17 and a voice input/output section 19 notify a user of the communication apparatus 10 that the communication apparatus 10 is present in the warning area by displaying an image and outputting a voice, respectively. Thereafter, a stop reception section 14a in an operation section 14 receives a notification of stop of functions of a radio communication unit 12 from the user and stops the functions.

This enables the user to urge the communication apparatus 10 to stop the functions of the radio communication unit through the medium other than the radio wave and, similarly to the main features, the user to spontaneously restrict the radio wave at the specific area. The communication apparatus 10 may allow the user to stop the functions of the radio communication unit only for a predetermined period after the notification is notified.

If the communication apparatus 10 is present in the prohibited area (area C), a stop control unit 12a in the radio communication section 12 stops the functions of the radio communication section 12.

This enables stopping the functions of the radio communication unit through the medium other than the radio wave irrespective of an intention of the user and forcedly restricting the radio wave at the specific area.

Further, the communication apparatus in this embodiment has additional features as will be listed below in relation to the main features. In this embodiment, if it is detected that the communication apparatus is out of the prohibited area and the warning area after the stop control processing stops the functions of the radio communication unit, a cancellation section 12b in the radio communication section 12 cancels the stop of the functions of the radio communication section 12. That is, the functions of the radio communication unit can be promptly recovered if the communication apparatus is out of the specific area without the need of an operation by the user to cancel the stop of the functions of the radio communication unit.

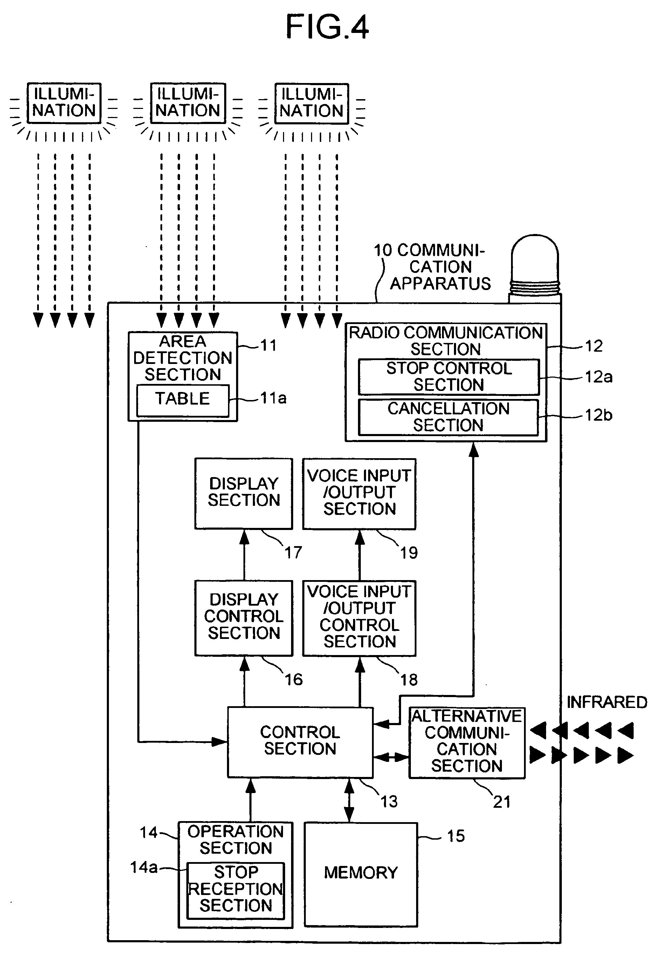

In this embodiment, if the stop control processing stops the functions of the radio communication unit, an alternative communication section 21 holds alternative communication over a medium other than the radio wave (see Fig. 4). Namely, communication can be held without generating a radio wave, so that it is possible to perform communication while restricting the radio wave at the specific area.

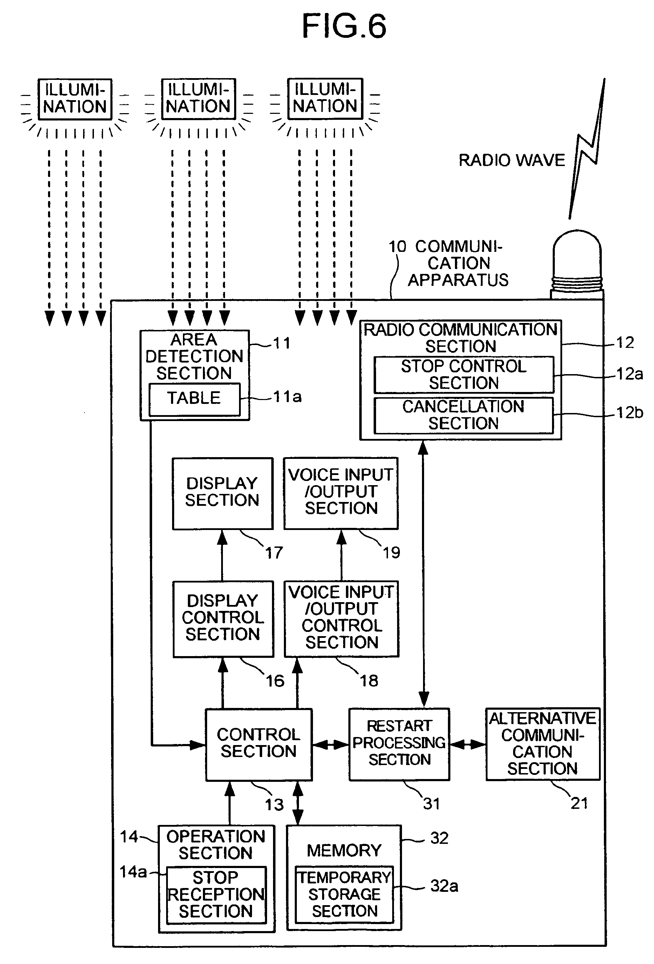

In addition, in this embodiment, a temporary storage section 32a in a memory 32 receives information transmitted over the radio wave after the stop cancellation processing cancels the stop of the functions of the radio communication unit from the user and stores the information (see Fig. 6). That is, this enables the user to prepare for information transmitted when the functions of the radio communication unit are stopped and automating synchronizing the cancellation of the stop of the functions of the radio communication unit with the transmission of the information.

Moreover, in this embodiment, when the stop cancellation processing cancels the stop of the functions of the radio communication unit after the stop control processing stops the functions of the radio communication unit incompletely at a point of a communication, a restart processing section 31 restarts the communication from the point. (see Fig. 6). This can dispense with starting transmission or reception from the beginning if the stop of the functions of the radio communication unit is canceled. Therefore, data can be efficiently transmitted and received.

In a first embodiment, the communication apparatus which detects whether the communication apparatus is present in the prohibited area or the warning area based on the medium other than the radio wave that travels in each of the areas. The communication apparatus notifies, when detecting that the communication apparatus is present in the warning area, the user that the communication apparatus is present in the warning area. The communication apparatus also receives, when notifying the user of the detection, a notification of stop of the functions of the radio communication unit from the user and stops the functions. The communication apparatus stops, when detecting that the communication apparatus is present in the prohibited area, the functions of the radio communication unit.

It is noted that the configuration of the communication apparatus in the first embodiment will be explained first, and that processing procedures of this communication apparatus will be explained next.

The configuration of respective sections of the communication apparatus in the first embodiment will be explained. Fig. 1 is a block diagram of the communication apparatus in the first embodiment. This communication apparatus 10 (which assumed as a cellular phone in the first embodiment) basically hold the Internet communication (software download, electronic mail and the like) and conversation with a server or the other communication terminal through a network or a base station. The communication apparatus 10 basically consists of the radio communication section 12, the control section 13, the operation section 14, the memory 15, a display control section 16, the display section 17, a voice input/output control section 18, and the voice input /output section 19.

Namely, in the communication apparatus 10, the radio communication section 12 transmits or receives data over the radio wave to or from the server or the other communication terminal through the network or the base station. The control section 13 controls various programs and various pieces of data to be input to and output from the memory 15.

The operation section 14 receives a user request by a multi-cursor key, an operation button or the like for inputting various pieces of information when sending a mail or holding a conversion. The display section 17 displays a mail communication result, information on the conversation or the like through the display control section 16. The voice input/output section 19 converts an input of a user voice to a radio wave through the voice input/output control section 18 and outputs a voice of a user of the other communication terminal so as to communicate with the other communication terminal when holding the conversation.

Further, as shown in Fig. 1, the communication apparatus 10 includes, as constituent elements related to the features of the invention, an area detection section 11, the stop control section 12a, the cancellation section 12b, and the stop reception section 14a besides the basic constituent elements. The constituent elements related to the features of the invention will be explained.

Among them, the area detection section 11 is a processing section that detects whether the communication apparatus 10 is present in the prohibited area or the warning area based on the medium other than the radio wave that travels in each area. To be specific, the area detection section 11 detects in which area, the area B or the area C, the communication apparatus 10 is present, based on the difference in frequency among the illuminations A, B, and C shown in Fig. 2A, and outputs an instruction corresponding to the detected area to the control section 13 based on the table 11a (see Fig. 2B). The difference in frequency among the illuminations is realized by using ordinary illuminations, inverter-based illuminations or the like.

The stop control section 12a is a processing section that stops the functions of the radio communication section 12 when the area detection section 11 detects that the communication apparatus 10 is present in the prohibited area. As shown in Fig. 2, when the area detection section 11 detects that the communication apparatus 10 is present in the area C (500 hertz to 5 kilohertz or lower), the stop control section 12a stops the functions of the radio communication section 12 without notifying the user of the detection (stops input and output of the radio wave).

The cancellation section 12b is a processing section that cancels the stop of the functions of the radio communication section 12 when the area detection section 11 detects that the communication apparatus 10 is output of the prohibited area and the warning area after the stop control processing stops the functions of the radio communication section 12. To be specific, when the communication apparatus 10 is out of the area B and the area C after the functions of the radio communication section 12 are stopped, the cancellation section 12b cancels the stop of the functions of the radio communication section 12 and restarts inputting and outputting the radio wave.

The control section 13 controls the area detection section 11, the stop control section 12a, the stop reception section 14a, the display control section 16, the display section 17, the voice input/output control section 18, and the voice input/output section 19 based on instructions of "standby", "notification", and "stop" from the area detection section 11.

The stop reception section 14a is a processing section that receives the stop of the functions of the radio communication section 12 from the user and stops the functions when the display section 17 or the voice input/output section 19 notifies the user that the communication apparatus 10 is present in the warning area.

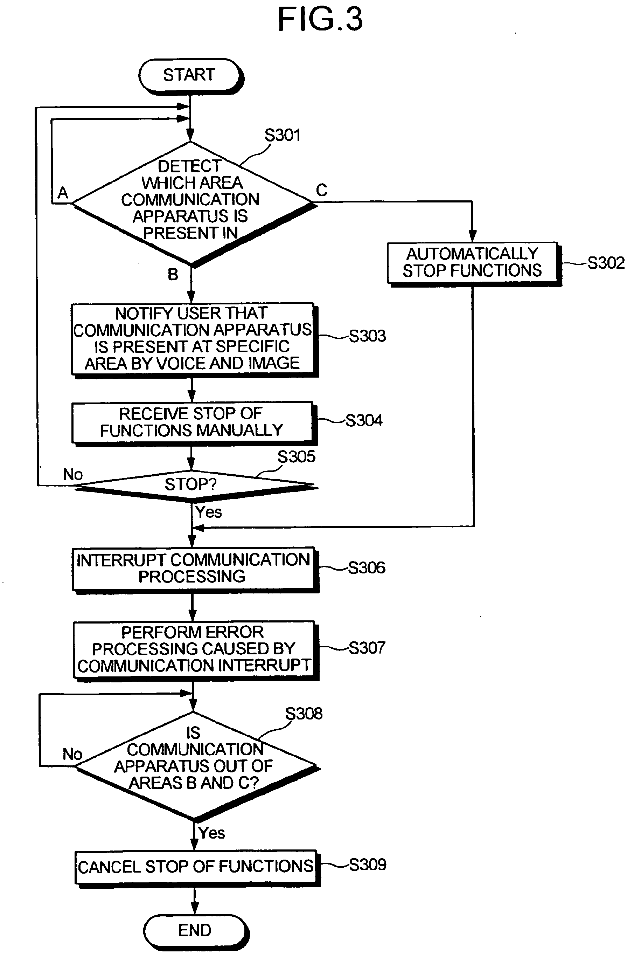

The processing procedures of the communication apparatus in the first embodiment will next be explained. Fig. 3 is a flow chart indicating the processing procedures of the communication appartus in the first embodiment. As shown in Fig. 3, the area detection section 11 detects which area the communication apparatus 10 is present in based on the difference in frequency among the illuminations emitted in each of the areas (step S301). For example, the area detection section 11 detects which area the communication apparatus 10 is present in based on the difference in frequency among the illuminations A, B, and C (area A: 600 hertz or lower, area B: 60 hertz to 500 hertz or lower, and area C: 500 hertz to 5 kilohertz or lower (see Fig. 2B) and outputs an instruction corresponding to the detected area to the control section 13 based on the table 11 a (see Fig. 2B).

When the communication apparatus 10 is present in the area A (ordinary area) ("A" at step S301), the area detection section 11 stands by in a standby mode. When the communication apparatus 10 is present in the area C (prohibited area) ("C" at step S301), the stop control section 12a in the radio communication section 12 stops the functions of the radio communication section 12 without notifying the user of the detection (step S302).

When the communication apparatus 10 is present in the area B (warning area) ("B" at step S301), the control section 13 outputs an image and a voice from the display section 17 and the voice input/output section 19 through the display control section 16 and the voice input/output control section 18, respectively. By doing so, the control section 13 notifies the user that the communication apparatus 10 is present at the specific area (step S303), and controls the stop reception section 14a in the operation section to receive the stop of the functions of the radio communication section 12 (step S304).

When the stop reception section 14a then receives the stop of the functions of the radio communication section 12 from the user ("Yes" at step S305), the radio communication section 12 interrupts a communication processing (at step S306) and performs an error processing caused by communication interrupt (at step S307). When the stop reception section 14a does not receive the stop of the functions of the radio communication section 12 from the user ("No" at step S305), the processings at the steps S301 to S305 are executed.

When the area detection section 11 detects that the communication apparatus 10 is out of the area B and the area C (the warning area and the prohibited area) ("Yes" at step S308), the control section 13 controls the cancellation section 12b in the radio communication section 12 to cancel the stop of the functions of the radio communication section 12 (at step S309).

As explained above, the communication apparatus in the first embodiment can cause the user to urge the communication apparatus 10 to stop the functions of the radio communication unit through the medium other than the radio wave and stop the functions of the radio communication unit at need irrespective of the intention of the user. Therefore, according to the communication apparatus, it is possible to ensure restricting the radio wave while paying attention to the user's convenience at the specific area. In relation to this, by realizing the detection unit based on the difference in frequency among the illuminations having good versatility, it is possible to easily restrict the radio wave at the specific area.

In the first embodiment, the communication apparatus detects both the prohibited area and the warning area, notifies, when detecting that the communication apparatus is present in the warning area, the user that the communication apparatus is present in the warning area, receives "stop", and stops, when the communication apparatus is present in the prohibited area, the functions. However, the present invention is not limited to this embodiment but is similarly applicable to an instance in which the communication apparatus detects either the prohibited area or the warning area and performs processings based on the detected area.

In a second embodiment, the communication apparatus that holds alternative communication through the medium other than the radio wave when the stop control processing stops the functions of the radio communication unit will be explained. In this embodiment, the configuration of the communication apparatus in the second embodiment will be explained first and processing procedures of this communication apparatus will next be explained.

Fig. 4 is a block diagram of the communication apparatus in the second embodiment. As shown in Fig. 4, this communication apparatus (which is assumed as a PDA in the second embodiment) further includes an alternative communication section 21 as compared with the communication apparatus in the first embodiment.

This alternative communication section 21 is a processing section that holds alternative communication through the medium other than the radio wave when the stop control processing stops the functions of the radio communication section 12. To be specific, the alternative communication section 21 transmits or receives data through a repeating device connected to a network such as the Internet or a base station over an infrared ray.

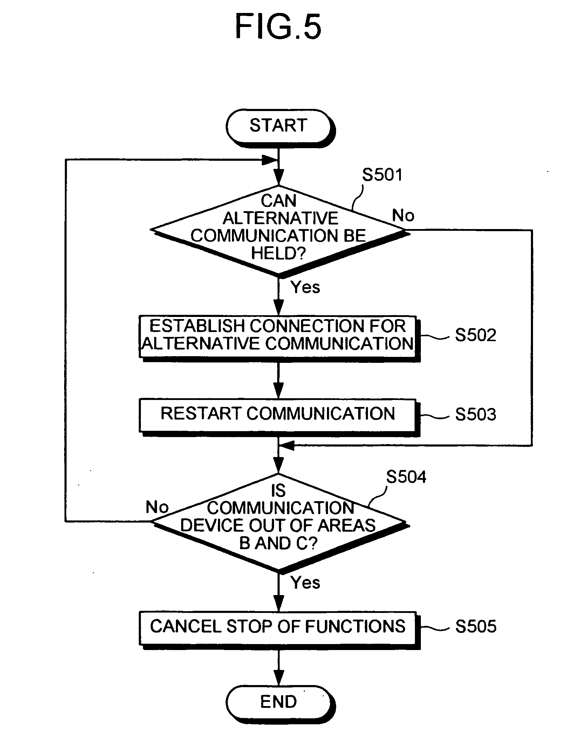

The processing procedures of the communication apparatus in the second embodiment will next be explained. Fig. 5 is a flow chart indicating the processing procedures of the communication apparatus in the second embodiment. As shown in Fig. 5, when the alternatively communication can be held while the stop control processing stops the functions of the radio communication section 12 ("Yes" at step S501), the alternative communication section 21 establishes a connection with the repeating device (at step S502).

The alternative communication apparatus 21 restarts communication through the medium other than the radio wave (at step S503). To be specific, when the stop control processing is performed while the radio communication section 12 is transmitting data, the alternative communication apparatus 21 transmits the data starting at an interrupted packet to the repeating device over infrared. When the stop control processing is performed while the radio communication section 12 is receiving data, the alternative communication apparatus 21 requests the repeating device to restart transmitting the data starting at the interrupted packet over the infrared.

Thereafter, the area detection section 11 detects whether the communication apparatus 10 is out of the area B and the area C (the warning area and the prohibited area) (at step S504). When the communication apparatus 10 is not out of the area B and the area C ("No" at step S504), the processings at the steps S501 to S504 are executed. When the communication apparatus 10 is out of the area B and the area C ("Yes" at step S504), the control section 13 controls the cancellation section 12b in the radio communication section 12 to stop the functions of the radio communication section 12 (at step S505).

As explained above, when the communication apparatus is present at the specific area, the alternative communication unit performs communication without generating the radio wave. Therefore, it is possible to perform communication while restricting the radio wave at the specific area.

In this embodiment, an instance in which the infrared is used as the alternative communication unit has been explained. However, the present invention is not limited to this embodiment but is similarly applicable to an instance in which an ultrasonic wave is used as the alternative communication unit.

In a third embodiment, the communication apparatus that receives information transmitted over the radio wave from the user after the stop control processing stops the functions of the radio communication unit and stores the information will be explained. In addition, the communication apparatus which restarts communication over the radio wave halfway along transmission or reception when the stop cancellation processing cancels the stop of the functions of the radio communication unit, will be explained. In this embodiment, the configuration of the communication apparatus in the third embodiment will be explained first and the processing procedures of this communication apparatus will be explained next.

Fig. 6 is a block diagram of the communication apparatus in the third embodiment. As shown in Fig. 6, this communication apparatus (which is assumed as a PDA in the third embodiment) further includes a restart processing section 31 and a memory 32 as compared with the communication apparatus in the second embodiment.

The restart processing section 31 restarts communication over the radio wave halfway along transmission or reception when the stop cancellation processing cancels the stop of the functions of the radio communication section 12 after the stop control processing stops the functions of the radio communication section 12. To be specific, when the communication is interrupted while the radio communication section 12 or the alternative communication section 21 is transmitting data, the restart processing section 31 performs a processing for causing the radio communication section 12 to restart transmitting the data starting at an interrupted packet. When the communication is interrupted while the radio communication section 12 or the alternative communication section 21 is receiving data, the restart processing section 31 requests the server to restart transmitting the data starting at the interrupted packet.

The memory 32 is generally a storage unit that stores various programs and various pieces of data. In the memory 32, the temporary storage section 32a receives information transmitted over the radio wave from the user after the stop cancellation processing cancels the stop of the functions of the radio communication section 12 and stores the information. For example, while a doctor is examining a patient (while the functions of the radio communication section 12 are being stopped), the temporary storage section 32a in the memory 32 can temporarily store patient's conditions and the like (information transmitted after the stop cancellation processing).

The processing procedures of the communication apparatus in the third embodiment will next be explained. In this embodiment, "storage processing" for temporarily storing transmitted information will be explained first and then "restart processing" for restarting communication over the radio wave halfway along transmission or reception will be explained.

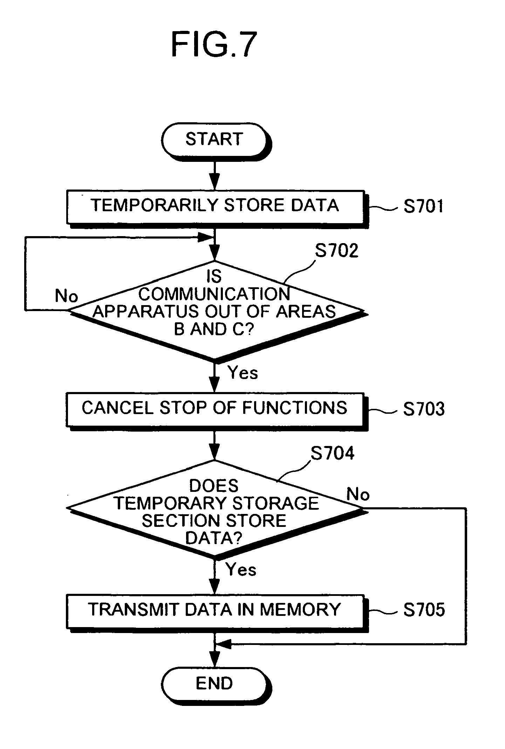

Fig. 7 is a flow chart indicating procedures for the storage processing performed by the communication apparatus in the third embodiment. As shown in Fig. 7, the temporary storage section 32a in the memory 32 receives information transmitted over the radio wave after the stop cancellation processing cancels the stop of the functions of the radio communication section 12 from the user and stores the information (at step S701).

Namely, when the functions of the radio communication section 12 are stopped, the temporary storage section 32 temporarily stores the information (data instructed and input by the user from the multi-cursor key, the operation button or the like or the data left by the stop control processing performed halfway along data transmission).

When the area detection section 11 detects that the communication apparatus 10 is out of the area B and the area C (the warning area and the prohibited area) ("Yes" at step S702), the control section 13 controls the cancellation section 12b in the radio communication section 12 to cancel the stop of the functions of the radio communication section 12 (at step S703).

Thereafter, when the temporary storage section 32a in the memory 32 stores data stores data ("Yes" at step S704), the control section 13 controls the data stored in the temporary storage section 32a in the memory 32 to be transmitted to the radio communication section 12 (at step S705).

As explained above, the storage processing enables the user to prepare for the information to be transmitted while the functions of the radio communication unit are stopped, and enables automating synchronization of cancellation of the stop of the functions of the radio communication unit with the transmission of information.

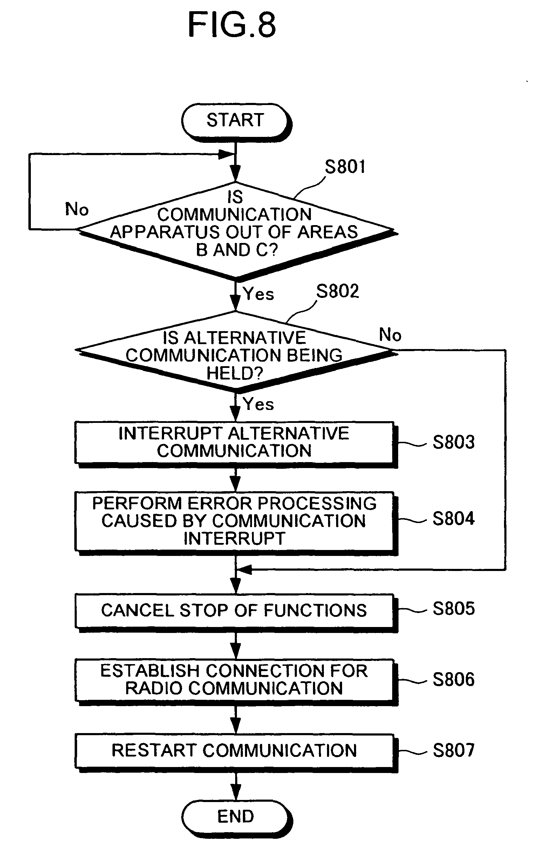

Fig. 8 is a flow chart indicating procedures for the restart processing performed by the communication apparatus in the third embodiment. As shown in Fig. 8, when the area detection section 11 detects that the communication apparatus 10 is out of the area B and the area C (the warning area and the prohibited area) ("Yes" at step S801) and alternative communication is being held ("Yes" at step S802), the alternative communication section 21 interrupts the communication processing (at step S803) and performs an error processing caused by communication interrupt (at step S804).

The control section 13 controls the cancellation section 12b in the radio communication section 12 to cancel the stop of the functions of the radio communication section 12 (at step S805). The radio communication section 12 establishes a connection with the server (at step S806).

Radio communication is restarted halfway along transmission or reception (at step S807). To be specific, when the communication is interrupted while the radio communication section 12 or the alternative communication section 21 is transmitting data, the restart processing section 31 performs a processing for causing the radio communication section 12 to restart transmitting the data starting at the interrupted packet. When the communication is interrupted while the radio communication section 12 or the alternative communication section 21 is receiving data, the restart processing section 31 requests the server to restart transmitting the data starting at the interrupted packet.

As explained above, the restart processing makes it unnecessary to transmit or receive the data from the beginning when the stop of the functions of the radio communication unit is canceled. Therefore, the data can be efficiently transmitted and received.

The embodiments of the present invention have been explained so far. However, the present invention may be carried out by various other embodiments within the scope of a technical concept defined by the claims besides the embodiments explained.

In the first to the third embodiments, the instances of applying the present invention to the cellular phone and the PDA have been explained. However, the present invention is not limited to the embodiments but is also applicable to all of radio communication devices such as Bluetooth products or wireless LAN products. The constituent elements of the communication apparatus shown in Figs. 1, 4, and 6 are merely functionally conceptual and the communication apparatus is not required to be constituted physically as shown in Figs. 1, 4, and 6. All of or part of the constituent elements can be functionally or physically distributed or integrated by arbitrary units according to various loads, a state in which the communication apparatus is used or the like.

In the first to the third embodiments, the difference in frequency among the illuminations has been explained as the medium other than radio waves during detection. However, the present invention is not limited to the embodiments but similarly applicable to instances of using the infrared ray and the ultrasonic wave. Further, the processing procedures, the control procedures, the concrete names, information including various data and parameters (e.g., the difference in frequency among the illuminations) can be arbitrarily changed unless specified otherwise.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A portable communication apparatus (10), comprising:
a radio communication unit (12) adapted to performing communication over a radio wave;
a detection unit (11) adapted to detecting an electromagnetic wave in a predetermined area;
a notification unit (13) adapted to notifying a user of the portable communication apparatus (10) a notification based on an attribute of the predetermined area; and
a stop control unit (12a) adapted to stopping the radio communication unit (10) from performing a communication function based on the attribute of the predetermined area,
**characterized in that**
- the detection unit (11) detects an electromagnetic wave output from an illumination in the predetermined area, determines that the attribute is a warning area when the illumination has a first frequency, and determines that the attribute is a prohibited area adjacent to the warning area when the illumination has a second frequency,
- the notification unit (13) notifies the user the notification when the detection unit (11) determines that the attribute is the warning area, and
- the stop control unit (12a) stops the radio communication unit (10) from performing the communication function according to an instruction from the user when the notification is notified, and stops the radio communication unit (10) from performing the communication function when the detection unit determines that the attribute is the prohibited area.

2. The portable communication apparatus (10) according to claim 1, further comprising a stop cancellation unit (12b) adapted to allowing the radio communication unit (10) to perform the communication function when the detection unit (11) does not detect the electromagnetic wave after the communication function is stopped.

3. The portable communication apparatus (10) according to claim 2, further comprising a storage unit (32) that receives information to be transmitted over the radio wave after the stop cancellation unit (12b) allows the radio communication unit (10) to perform the communication function, and stores the information.

4. The portable communication apparatus (10) according to claim 1. further comprising an alternative communication unit (21) that holds alternative communication over a medium different from the radio wave when the communication function is stopped.

5. The portable communication apparatus (10) according to claim 2, further comprising a restart processing unit (31) that restarts the communication function, upon the communication function being stopped during a communication, from a condition at a point in time when the communication is stopped, when the stop cancellation unit (12b) allows the radio communication unit (10) to perform the communication function.

## Patentansprüche

1. Tragbare Kommunikationsvorrichtung (10) mit:
einer Funkkommunikationseinheit (12), die dafür ausgelegt ist, um die Kommunikation über eine Funkwelle auszuführen;
einer Detektionseinheit (11), die dafür ausgelegt ist, um eine elektromagnetische Welle in einem vorbestimmten Bereich zu detektieren;
einer Mitteilungseinheit (13), die dafür ausgelegt ist, um einem Nutzer der tragbaren Kommunikationsvorrichtung (10) eine Mitteilung auf der Basis eines Attributs des vorbestimmten Bereichs mitzuteilen; und
einer Stoppsteuereinheit (12a), die dafür ausgelegt ist, um die Funkkommunikationseinheit (10) vom der Ausführung einer Kommunikationsfunktion auf der Basis des Attributs des vorbestimmten Bereichs abzuhalten,
**dadurch gekennzeichnet, daß**
- die Detektionseinheit (11) eine elektromagnetische Welle, die von einer Beleuchtung in den vorbestimmten Bereich ausgegeben wird, detektiert, bestimmt, daß das Attribut ein Warnbereich ist, wenn die Beleuchtung eine erste Frequenz hat, und bestimmt, daß das Attribut ein Sperrbereich ist, der an den Warnbereich angrenzt, wenn die Beleuchtung eine zweite Frequenz hat,
- die Mitteilungseinheit (13) dem Nutzer die Mitteilung mitteilt, wenn die Detektionseinheit (11) bestimmt, daß das Attribut der Warnbereich ist, und
- die Stoppsteuereinheit (12a) die Funkkommunikationseinheit (10) vom Ausführen der Kommunikationsfunktion gemäß einer Instruktion von dem Nutzer abhält, wenn die Mitteilung übermittelt ist, und die Funkkommunikationseinheit (10) vom Ausführen der Kommunikationsfunktion abhält, wenn die Detektionseinheit bestimmt, daß das Attribut der Sperrbereich ist.

2. Tragbare Kommunikationsvorrichtung (10) nach Anspruch 1, ferner mit einer Stoppunterdrückungseinheit (12b), die dafür ausgelegt ist, um es der Funkkommunikationseinheit (10) zu erlauben, die Kommunikationsfunktion auszuführen, wenn die Detektionseinheit (11) die elektromagnetische Welle nicht detektiert, nachdem die Kommunikationsfunktion gestoppt ist.

3. Tragbare Kommunikationsvorrichtung (10) nach Anspruch 2, ferner mit einer Speichereinheit (32), die Informationen empfängt, die über die Funkwelle zu senden sind, nachdem die Stoppunterdrückungseinheit (12b) der Funkkommunikationseinheit (10) erlaubt, die Kommunikationsfunktion auszuführen, und die Informationen speichert.

4. Tragbare Kommunikationsvorrichtung (10) nach Anspruch 1, ferner mit einer Alternativkommunikationseinheit (21), die eine alternative Kommunikation über ein Medium abhält, das sich von der Funkwelle unterscheidet, wenn die Kommunikationsfunktion gestoppt ist.

5. Tragbare Kommunikationsvorrichtung (10) nach Anspruch 2, ferner mit einer Neustartverarbeitungseinheit (31), welche die Kommunikationsfunktion neu startet, wenn die Kommunikationsfunktion während einer Kommunikation gestoppt wird, und zwar ab einem Zustand zu einem Zeitpunkt, zu dem die Kommunikation gestoppt wird, wenn die Stoppunterdrückungseinheit (12b) das Ausführen der Funkkommunikationseinheit (10) erlaubt, die Kommunikationsfunktion auszuführen.

## Revendications

1. Appareil de communication portable (10), comprenant :
une unité de radiocommunication (12) adaptée pour exécuter une communication sur une onde radio ;
une unité de détection (11) adaptée pour détecter une onde électromagnétique à l'intérieur d'une zone prédéterminée ;
une unité de notification (13) adaptée pour notifier à un utilisateur de l'appareil de communication portable (10) une notification sur la base d'un attribut de la zone prédéterminée : et
une unité de commande d'arrêt (12a) adaptée pour arrêter l'unité de radiocommunication (10) l'empêchant ainsi d'exécuter une fonction de communication sur la base de l'attribut de la zone prédéterminée,
**caractérisé en ce que** :
- l'unité de détection (11) détecte une onde électromagnétique délivrée en sortie par un éclairage dans la zone prédéterminée, détermine que l'attribut est une zone d'avertissement lorsque l'éclairage a une première fréquence, et détermine que l'attribut est une zone interdite adjacente à la zone d'avertissement lorsque l'éclairage a une deuxième fréquence ;
- l'unité de notification (13) notifie l'utilisateur de la notification lorsque l'unité de détection (11) détermine que l'attribut est la zone d'avertissement ; et
- l'unité de commande d'arrêt (12a) arrête l'unité de radiocommunication (10) l'empêchant ainsi d'exécuter la fonction de communication sur la base d'une instruction envoyée par l'utilisateur lorsque la notification est notifiée, et arrête l'unité de radiocommunication (10) l'empêchant ainsi d'exécuter la fonction de communication lorsque l'unité de détection détermine que l'attribut est la zone interdite.

2. Appareil de communication portable (10) selon la revendication 1, comprenant en outre une unité d'annulation d'arrêt (12b) qui est adaptée pour permettre à l'unité de radiocommunication (10) d'exécuter la fonction de communication lorsque l'unité de détection (11) ne détecte pas l'onde électromagnétique après que la fonction de communication a été arrêtée.

3. Appareil de communication portable (10) selon la revendication 2, comprenant en outre une unité de stockage (32) qui reçoit des informations à transmettre sur l'onde radio après que l'unité d'annulation d'arrêt (12b) a permis à l'unité de radiocommunication (10) d'exécuter la fonction de communication, et qui enregistre les informations.

4. Appareil de communication portable (10) selon la revendication 1, comprenant en outre une unité de communication alternative (21) qui maintient une communication alternative sur un support différent de l'onde radio lorsque la fonction de communication est arrêtée.

5. Appareil de communication portable (10) selon la revendication 2, comprenant en outre une unité de commande de redémarrage (31) qui relance la fonction de communication, après que la fonction de communication a été arrêtée durant une communication, depuis une condition à un point dans le temps où la communication est arrêtée, lorsque l'unité d'annulation d'arrêt (12b) permet à l'unité de radiocommunication (10) d'exécuter la fonction de communication.
